# EUROPEAN PATENT SPECIFICATION

(11) **EP 0 874 341 B1**
(45) Date of publication and mention of the grant of the patent: **27.08.2003**
(21) Application number: 98201230.4
(22) Date of filing: 17.04.1998
(51) Int. Cl.: G08B 25/10, G08B 26/00

(54) **Reduced power installation and supervision of wireless security system devices**
Installierung und Überwachung von drahtlosen Sicherheitseinrichtungen mit reduzierter Energie
Installation et surveillance avec consommation d'énergie réduite des dispositifs de sécurité sans fil

(30) Priority: 21.04.1997 US 44509 P; 21.04.1997 US 43737 P
(43) Date of publication of application: 28.10.1998
(73) Proprietor: Honeywell International Inc., Morriston, NJ 07962-2245 (US)
(72) Inventor: Addy, Kenneth Lyle, Massapequa, New York 11758 (US)
(74) Representative: Lucas, Brian Ronald

(56) References cited:
- EP-A- 0 733 988
- WO-A-91/14244
- US-A- 4 754 261
- US-A- 5 461 365

## Description

### BACKGROUND OF THE INVENTION

The present invention relates to communications devices and protocols such as those used in wireless alarm systems having multiple wireless devices in communication with a central control unit; and in particular to such alarm systems where the transmitting elements of the system are designed to transmit messages at different power levels so that (i) wireless receiving devices are installed at reduced power to ensure an adequate transmit/receive margin during normal operation, and (ii) wireless transmitting devices emit supervision messages at reduced power to ensure adequate transmit/receive margin during emission of alarm messages.

A recent innovation in security applications is the use of two-way wireless user interface devices, which are keypads or panic transmitters with system status indicators. These are portable devices, which may be used to control and interrogate the security system for system status. An example of such devices are the 5827BD and 5804BD products available from ADEMCO in Syosset, NY. These have the advantages of portability if required, or alternatively may be mounted at an installation, thus reducing the high costs of wiring a conventional wired user interface device. In addition, wireless remote sirens and dialers may be employed to reduce wiring and labor costs.

Typically during alarm system installation, a conventional central control unit is placed into an installation mode and its receiver sensitivity is reduced (see U.S. Patent No. 4,754,261). This allows the installer to check the transmission signal margin of the alarm devices, i.e. window sensors, door sensors, etc. If the central control unit recognizes an alarm flag from the alarm device at reduced receiver sensitivity, than there will be adequate signal margin during normal operation. That is, if the radio environment changes during normal operation, due to movement of furniture etc., the alarm signal transmitted from the alarm devices have sufficient signal strength to be received by the central control unit receiver in this changed, adverse condition.

In the case where a wireless user interface device with signal receiver capabilities is being installed, ensuring an adequate signal margin between the central control unit transmitter and the wireless user interface device is typically more difficult because the wireless user interface devices currently may not be designed with a keypad selection or a switch to reduce their input sensitivity. It would be advantageous, when the central control unit receiver goes into installation mode (reduced sensitivity), at that same time to place the central control unit transmitter into reduced output power mode, thus obtaining an adequate signal margin in both the up link (user interface device to central control unit receiver) and down link (central control unit transmitter to user interface device).

It is also desirable to ensure that the wireless remote siren and dialer are installed with adequate signal margin so that if the radio environment changes during normal operation, the messages from the central control unit transmitter have sufficient signal strength to be received by the wireless remote device in this changed, adverse condition.

Thus, in accordance with a first aspect of the present invention, it is an object to provide a method for ensuring that an adequate signal margin exists between the central control unit and the wireless devices during an alarm system installation.

It is also an object of the first aspect of the present invention to provide an alarm system that provides means for transmitting between a central control unit and a wireless device at a reduced transmission level during installation mode and at a normal transmission level while not in installation mode.

It is yet a further object of the first aspect of the present invention to provide a common installation mode to verify communication between the central control unit and the wireless alarm devices (window sensors, door sensors, etc.) and at the same time verify communication between the central control unit and the wireless devices having receive capability (user interface devices, remote siren, and remote dialer).

With regard to a second aspect of the present invention, most radio frequency (RF) wireless security systems available today, employ a multiplicity of transmitters in communication with a central receiver control unit. The information transmitted typically describes the state of various transducers or sensors associated with each transmitter, such as smoke, motion, breaking glass, shock and vibration detectors; door, window and floor mat switches; etc. These transmitters are designed to be inexpensive to manufacture and generally are capable of transmission only rather than reception only or transmission and reception, which would add significant cost to the design. In order to meet certain regulatory agency requirements, the transmitters must periodically transmit supervisory messages to the central receiver control unit in order to identify potential problems with the communication link from any transmitter in the alarm system as soon as possible. The supervisory message (as well as a normal alarm message) comprises a unique embedded identification code, which serves to identify to the central receiver control unit the source of the particular supervisory message (or alarm message). Typically, when a supervisory message is properly received and detected by the central receiver control unit, the identification code is made available to the remainder of the system for further processing.

For Safety of Life applications, where an alarm condition may signify a health or security emergency, the RF wireless system must also comply with more stringent regulations, such as Underwriters Laboratories regulation UL864. This regulation requires that supervisory messages be transmitted at a reduced power level below that of the alarm message (i.e. normal, non-supervisory signals) by a minimum of 3dB. Equivalent means may be utilized as long as the transmission of alarm messages comprises an effective power margin over that of the periodic transmission of supervisory messages sent by each transmitter in the alarm system.

Therefore, with respect to the second aspect of the invention, it would be advantageous if the alarm system would transmit supervisory messages at a power level below that of alarm messages, thereby ensuring that the transmission of alarm messages would have an effective margin over that of the periodic transmission of the supervisory message from each transmitter in the alarm system. Such a feature would be most beneficial if it could be applied without substantial modification to existing receivers already in commercial use.

Additional considerations may be found to hinder the implementation of such a concept such as overall cost, and various system parameters comprising message formats and protocols and repetition of messages. The ideal implementation would be transparent to such parameters that could very well differ from country to country or even among different manufacturers.

Therefore, with respect to the second aspect of the invention, it would be advantageous if the alarm system would provide a cost effective means for reducing the transmitted signal power of supervisory messages and also transmit alarm messages at full power, which is independent of such parameters as message format, repetition of messages, etc. Such a system would likely require differentiation between supervisory and alarm message in the transmitter prior to transmission.

### SUMMARY OF THE INVENTION

Thus, the first aspect of the present invention is a method for installing an alarm system comprising the steps of initiating an install mode in a central control unit; transmitting from a transmitter a message at a reduced power level with respect to a normal operating power level; receiving, at a wireless device, said reduced power message, said wireless device being relocatable with respect to said transmitter; and indicating when said reduced power message is successfully received. Optionally, this method includes the further steps of, when said reduced power message is not successfully received, then relocating said wireless device; transmitting from said transmitter a message at a reduced power level with respect to a normal operating power level; receiving, at said wireless device, said reduced power message, said wireless device being relocatable with respect to said transmitter, and indicating when said reduced power message is successfully received.

Thus, this first aspect of the present invention is a method for ensuring that an adequate signal margin exists between an alarm system's central control unit and its wireless devices. The wireless devices include a remote dialer, a remote siren, and optimally a user interface device such as a two-way(transmit and receive) portable keypad. This method typically is used during installation, which is initiated by manual input means at the central control unit and/or by selecting a user input code at the user interface device. The important feature of this method is that the central transmitter is put in a reduced power mode upon initiation of the installation mode.

During installation mode, the installer causes the central transmitter to transmit messages at low power and checks to see if the devices being installed take appropriate action. For example, while installing a user interface, the installer would request status from the central controller by entering user input codes into user interface. The central transmitter would then transmit a status message at low power back to the user interface, which would display the status upon receipt. When the installer is locating wireless devices which do not display status, such as a remote siren, the installer would simulate an alarm condition by activating a manual input means, a sensor device or a user interface device such as a panic button. This causes an alarm received message to be transmitted at a reduced power level from the central transmitter to the wireless device being installed, which would take appropriate action upon receipt (i.e. activate siren).

When the wireless device does not indicate that it has successfully received the reduced power message, then the wireless device is relocated by the installer and a reduced power message is retransmitted to the wireless device. The installer continues this process until the wireless device indicates that it has successfully received a reduced power message. A reduced power level of approximately 12dB ensures that the wireless device is installed with adequate signal margin for normal operation.

In addition, reduced central transmitter output power may be coincident with reduced central receiver sensitivity. The installer can conveniently ensure system signal margin in both up and down links by triggering or simulating an alarm condition at an alarm device (i.e. opening a window) and checking that the wireless devices indicate an alarm condition.

Finally when the installation is completed, the installer goes into normal operation mode by initiating manual input means at the central control unit or by selecting a user input code for normal operation at a wired or wireless user interface device. There is also a safety feature that ensures the alarm system will not be left in install mode by the installer. An install timer, which is set upon entering the install mode, causes the alarm system to go back into normal mode after a predetermined amount of time.

This first aspect of the present invention is embodied by an alarm system comprising a central control unit with a transmitter and a plurality of wireless devices with means for receiving messages from the central transmitter. The central control unit operates in both a normal mode and an install mode. The central transmitter provides means for transmitting at two different output power levels, the output being transmitted at a higher power level during normal operation, and the output being transmitted at the lower power level during an installation mode. The central transmitter broadcasts, electromagnetically such as by radio frequency (RF) means, alarm received messages and other status and control messages to the wireless devices. The wireless devices comprise receiving means for receiving messages from the central transmitter and indication means for indicating when the message has been successfully received. The indicating means may be an audible sound from a remote siren, activation of a remote dialer, and/or a visual display or audible sound from a user interface device. The wireless device is relocatable with respect to the central transmitter, at least until permanently mounted by the installer.

This first aspect of the present invention is based on the ability to control the radiated power of the central transmitter. The central transmitter has two distinct operating modes under the control of a processor; normal output power and reduced output power. Upon initiation of the install mode, the processor outputs a control signal, causing a reduced central transmitter output power level. This transmitter includes simple, cost effective circuitry. Those skilled in the art will recognize that control of transmitter output power may be achieved in alternate ways, although the method described offers a good low cost solution.

The central control unit may comprise an install mode switch to activate or deactivate (normal mode) the installation mode, an alarm switch to initiate an alarm received message transmission, and central receiver to receive commands transmitted by a user interface device and alarm activation signals transmitted by alarm devices. The central receiver may also provide means for receiving at two different input sensitivity levels, the input sensitivity being higher during normal operation, and the input sensitivity being lower during an installation mode.

Alarm devices such as smoke, motion, breaking glass, shock and vibration detectors; door, window and floor mat switches; etc. transmit alarm activation signals when activated. The central receiver receives the alarm activation signals causing the central system controller to transmit via the central transmitter an alarm received message to the wireless devices.

A user interface device, which may be a wall mounted (wired or wireless) or a hand-held transceiver device, comprises input means for entering status changes, status requests, and commands such as an install mode command or a normal mode command. The user interface device also comprises transmission means for transmitting the messages and commands to the central receiver. The user interface device also comprises receiving means for receiving status messages from the central transmitter and status output means such as an audible sound and/or a visual display. The user interface device may also provide means for transmitting an alarm activation signal to the central receiver.

This first aspect of the present invention provides a unique method of accomplishing the stated objectives without compromising the simplicity of the wireless devices or complicating the installation process.

The second aspect of the present invention utilizes a method for periodically self-testing a communications path in wireless alarm systems, which comprises timing a supervisory period to provide a delay between transmissions of supervisory messages, generating a supervisory message, generating a transmission power control signal comprising one of at least two states upon termination of the supervisory period, and transmitting the supervisory message at a reduced power level as indicated by the state of the transmission power control signal. The second aspect of the present invention also utilizes the steps of generating an alarm status message in response to receipt of an alarm status signal from an alarm sensor, generating the transmission power control signal in response to receipt of the alarm status signal from the alarm sensor, and transmitting the alarm status message at a normal power level as indicated by the state of the transmission power control signal.

This second aspect of the present invention is embodied by an apparatus for periodically self-testing a communications path in wireless alarm systems, which comprises supervisory period timing means for timing a duration of a supervisory period existing between transmissions of supervisory messages, means for outputting a supervisory period termination signal upon termination of the supervisory period, message generation means for generating the supervisory message and a transmission power control signal, the transmission power control signal comprising one of at least two states, and transmission means for transmitting the supervisory message at a predetermined reduced power level in response to a first state of the transmission power control signal.

The second aspect of the present invention is also characterized as being embodied in an alarm sensor transmitter for use in a wireless alarm system, which comprises a supervisory period timer which times a duration of a supervisory period existing between transmissions of supervisory messages and outputs a supervisory period termination signal upon termination of the supervisory period, a message generator which generates the supervisory message and a transmission power control signal in response to the supervisory period termination signal, the transmission power control signal comprising at least two states, the message generator generating an alarm status message and the transmission power control signal in response to receipt of an alarm status signal from an alarm sensor, a radio frequency transmitter which transmits the supervisory message at a predetermined reduced power level in response to the state of the transmission power control signal and transmits the alarm status message at a predetermined normal power level in response to the state of the transmission power control signal, the radio frequency transmitter modulating the transmission signal with the generated supervisory message and the alarm status message and outputting the modulated transmission signal, an oscillator which outputs a data clock signal for synchronizing the message generator and a phase detection clock signal for synchronizing the radio frequency transmitter, thc data clock signal and thc phase detection clock signal being substantially in phase with each other, and a phase lock loop circuit which substantially maintains correlation between a phase of the transmission signal and a phase of the phase detection clock signal.

Thus, the second aspect of the present invention is also embodied in a data communications method and system comprising a plurality of remote devices, each comprising means for transmitting supervisory messages and non-supervisory messages at different power levels, and a receiver providing means for receiving such messages.

The second aspect of the present invention is based on the premise that system reliability and integrity are improved if supervisory messages are transmitted at lower power relative to the power of alarm transmissions. This invention provides a unique method of accomplishing the stated objectives without increasing receiver cost or complexity and without increasing on-air time to provide unique supervisory message formats.

The first requirement of the transmitter is that it should have the ability to generate a certain logic level during the time period when a supervisory message is being generated. This logic level may then be used to control analog circuitry, which in-turn controls output power.

The transmitter implemented in the present invention is based on a unique Application Specific Integrated Circuit (ASIC), although those skilled in the art will recognize that discrete component implementations, such as those comprising a microcontroller or microprocessor, could achieve similar results. The ASIC includes logic circuitry to generate the messages that are to be transmitted, and in addition includes the RF circuits required to generate a modulated RF signal ready for transmission. During the generation of a supervisory message, the ASIC outputs a logic level on an output pin (SUPXMI) which is used to control output power. There are various methods available to achieve this power reduction; such as control of amplifier current, switching of a load across the output, or switching of reactive elements in tuned circuits. Those skilled in the art will recognize that the power control can be completely self contained within the ASIC as well as being brought to external circuitry.

The transmitted signals are received and decoded and checked for valid CRC etc., however since supervisory messages are transmitted at lower power, there is an effective built-in system margin for alarm messages.

### BRIEF DESCRIPTION OF THE DRAWING

Figure 1 is a block diagram of a preferred embodiment alarm system of the first aspect of the present invention.
Figure 2 is a block diagram of the central control unit of Figure 1.
Figure 3 is a flow chart of the processing utilized by the central control unit of Figure 1.
Figure 4 is a schematic of the central transmitter of Figure 1.
Figure 5 is a block diagram of an alarm system utilizing reduced power supervisory message transmission of the second aspect of the present invention.
Figure 6 is a flowchart of a method employed by the alarm sensor transmitter of Figure 5 to reduce transmission power of supervisory messages.
Figures 7A and 7B are block diagrams of an alarm sensor transmitter of the alarm system of Figure 5.
Figure 8 is a schematic representation of an alternative embodiment of an oscillator function and an RF amplifier modulator function of Figures 7A and 7B that perform the reduced power supervisory message transmission of the second aspect of the present invention.
Figure 9 is a schematic representation of a second embodiment of the RF amplifier modulator function of Figure 6.
Figure 10 is a block diagram illustrating functional blocks of an alternate embodiment of a message and CRC generator block of Figures 7A and 7B.

### DETAILED DESCRIPTION OF THE PREFERRED EMBODIMENT

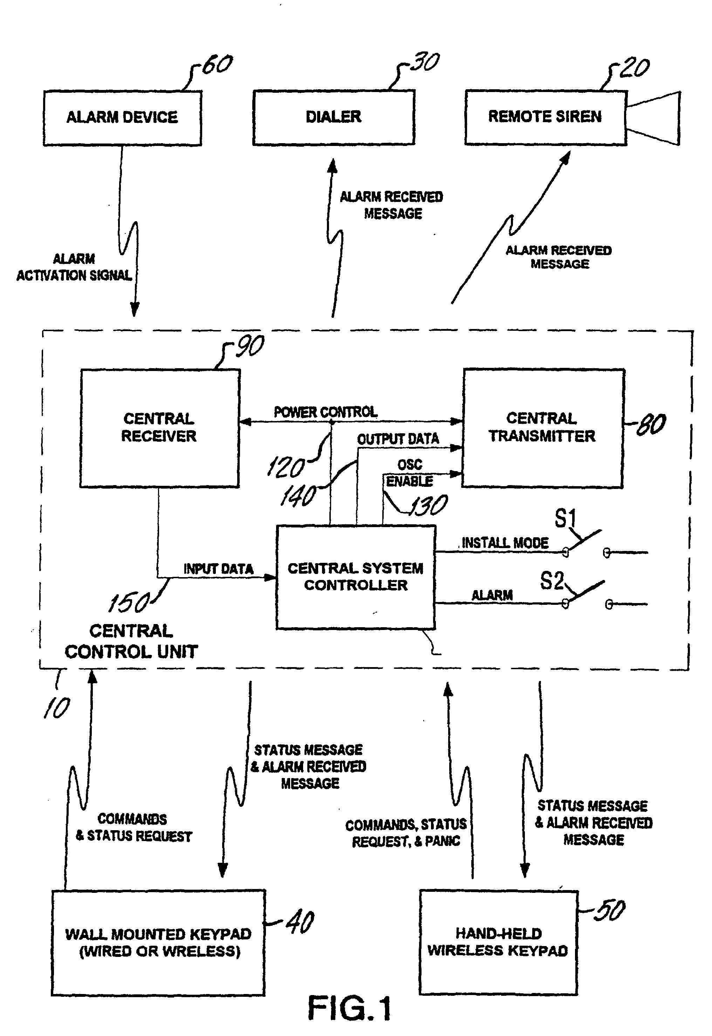

In accordance with the first aspect of the present invention, Figure 1 shows a typical alarm system 5 including a central control unit 10 comprising a central system controller 70, a central receiver 90 and a central transmitter 80. The alarm system 5 also comprises a plurality of alarm devices 60, which refer generically to any or all of various types of alarm detection devices such as glass break detectors, door opening detectors, etc. The alarm system 5 also comprises a user interface device in the form of a wall mounted keypad 40, which maybe wired to the central receiver and the central transmitter. The wall mounted keypad 40 may also be wireless, such as an ADEMCO 5827BD, transmitting to the central transmitter and receiving from the central receiver via RF transmission. The wall mounted keypad (wired or wireless) allows the user to input system options by selecting specific user codes, and view system status through visual and audio means. The system also may include a user interface device in the form of a hand-held wireless keypad 50, such as the ADEMCO 5804BD, which allows the user to arm or disarm the alarm system 5, trigger an alarm, determine alarm system status, and display status through visual and audio indicators. The alarm system 5 also includes a wireless remote siren 20 and a remote dialer 30.

As well known in the art, during an alarm condition, the central receiver 90 receives Alarm Activation Signals from the alarm device 60 or the hand-held wireless keypad 50(e.g. a panic signal). The central system controller 70 then analyzes the Alarm Activation Signals and determines if an alarm condition truly exists. If an alarm condition does exist, the central transmitter 80 broadcasts an Alarm Received Message to the wireless remote siren 20, wireless dialer 30, hand held wireless keypad 50 and wall mounted keypad 40.

The receiver 90 receives status requests, install mode commands and other commands from the wall mounted keypad 40 which is part of the invention herein. The transmitter 80 transmits status messages when the receiver receives a status request. Details regarding the protocol of the transmission of commands and status between the wired or wireless devices and the central control unit are already well known to someone skilled in the art.

During installation, the installer typically mounts the central control unit 10 in a remote hidden location because it is important to limit access from an intruder and it is rather large and unsightly. He then installs the wall mounted keypad 40, on the wall of the building by an entrance. In order to keep components of one alarm system from communicating with components of different alarm system (i.e. setting the alarm of the house next door) a site ID is embedded in each device's transmission. The wall mounted keypad 40 requests the site ID to be transmitted from the central control unit 10. If the cover of the central control unit 10 has been removed (a safety feature which allows the site ID to be sent only during installation) the site ID is transmitted by the central control unit 10. The site ID is programmed into EEPROM in the central control unit 10 at the factory. Along with the site ID, the wall mounted keypad 40 receives a device address, which is necessary for communication with the central control unit 10. The messages to and from the central control unit 10 also contain this address allowing the central control unit 10 to decode which alarm device sent the message. The details of how a device learns the site ID and device address are well known in the art and are not described here.

Next the installer enters a command, such as a status request, into the wall mounted keypad 40 and checks to see that the wall mounted keypad 40 displays the status. This insures communication between the wall mounted keypad 40 and the central control unit 10. The installer then enters the install command into the wall mounted keypad 40 or activates install mode switch S1 to indicate to the central system controller 10 that a Power Control Signal 120 should be at a logic level 0. The Power Control Signal is connected via wires from the central system controller 70 to both the central receiver 90 and the central transmitter 80 and causes both the central receiver 90 and the central transmitter 80 to go into a reduced power install mode. The reduced power install mode causes the central receiver 90 to receive signals at a power level of approximately 12dB lower than its normal level by reducing its sensitivity and the central transmitter 80 to transmit messages at a power level also of approximately 12dB lower than its normal level.

The Power Control Signal also sets a timer in the central system controller. The timer is a safety feature, which causes the alarm system to go back into normal mode after a predetermined amount of time if the installer forgets to return the alarm system back into normal mode manually.

If the wall mounted keypad 40 is wireless, the installer will recheck its communication with the central control unit 10 by entering a status request user code at the wall mounted keypad 40, which is transmitted to the central receiver 90. If the status request message is received by the receiver, now at low power, the central transmitter 80 will transmit a status message to the wall mounted keypad 40 also at low power. The installer will then check to see if the status message is received and displayed by the wall mounted keypad 40. If not the installer relocates the wall mounted keypad 40 and rechecks its communication in the same way.

The installer then mounts a wireless device, such as remote siren 20, on the outside of the building (or inside in a basement). The site ID and the device address are learned by the wireless device in the same manner as the wall mounted keypad. A convenient way to test for adequate signal margin between the central control unit 10 and the wireless device is to simulate the presence of an alarm condition and check to see if the wireless device takes appropriate action. To simulate the presence of an alarm condition, the installer activates switch S2 which causes the central system controller 70 to generate an alarm received message. The alarm received message is transmitted by the central transmitter 80 at a reduced power to the remote siren 20. If the remote siren 20 receives the message and performs its function (i.e. sounds an audible tone), the installer knows the remote siren 20 has been installed with adequate signal margin. If the remote siren 20 does not perform its function, the installer will relocate the remote siren 20 (i.e. move it closer) and retest by activating alarm switch S2. The process can be repeated until the siren is successfully heard, thus ensuring an adequate signal margin during normal operation mode. Finally, the installer will turn the remote siren 20 off using key codes at the wall mounted keypad 40.

Once the installer locates the proper position of the first wireless device, he performs the entire process again for each wireless device, i.e. the remote dialer 30, and/or the hand held wireless keypad 50. The processes would be the same for each wireless device except that the installer would be looking for different outputs. For example, the remote dialer's 30 output would be telephone transmission of alarm information to a security station and the hand held wireless keypad's 50 output would also be display of an alarm code and/or sounding of an audible alarm signal.

The installer then installs the alarm devices 60 and checks the entire system operation by raising an alarm at the device 60, such as by opening a window. The alarm device 60 transmits the Alarm Activation Signal, which is received at reduced power by the central receiver 90. The input data from the central receiver is processed by the central system controller. The central system controller 70 sends output data 140 to the central transmitter 80. The central transmitter 80 broadcasts the Alarm Received Message at reduced power to the wireless devices. Lastly, the wireless devices take appropriate action and indicate by visual or audible means that they have received an Alarm Received Message. At this point the installer knows that there is adequate signal margin in both the up and down links.

The installer then exits the install mode via a keyed command from the wall mounted keypad 40. The central system controller 70 sets the Power Control signal 120 to a logic level 1. This causes the central receiver 90 to receive at normal power and the central transmitter 80 to transmit at normal power. Thus all messages are conveyed during normal operation at a signal margin above that which was used during installation.

Those skilled in the art will recognize that there are many variations to installing an alarm system and the one described here may be performed in other ways. For example, using the alarm device 60 or the hand held wireless keypad 50 to transmit an Alarm Activation Signal to cause the Alarm Received Message to be generated by central system controller 70 rather than alarm switch S2.

The significance of the present invention is the ability to reduce output power of the central transmitter 80 during the alarm system installation to insure that adequate signal margin exists in normal operation mode. It will be apparent to those skilled in the art that the transmitted messages may be formatted in many different ways, and that the invention is not dependent on a particular format. Also the design of the remote siren 20, the remote dialer 30, the hand held wireless keypad 50, the wall mounted keypad 40, and the alarm devices 60 are well know in the art and do not need to be described.

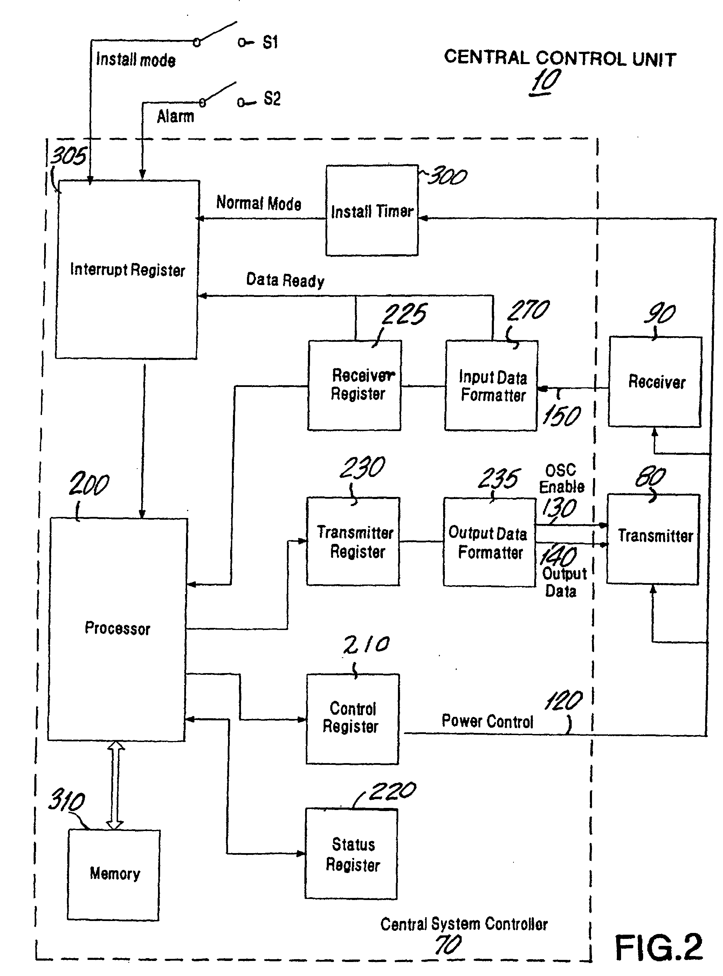

Figure 2 shows the central control unit 10 block diagram. Shown is the transmitter 80, the receiver 90, the install mode switch S1, alarm switch S2, and the central system controller 70. The central system controller 70 includes a processor 200 and its supporting digital logic, which includes memory 310 (RAM and ROM), interrupt register 305, status register 220, control register 210, and data registers. The data registers include receiver register 225, and transmitter register 230. The receiver register 225 accepts data from the input data formatter 270. The input data into the input data formatter 270 is from the receiver 90. The input data formatter 270 comprises digital logic, which also provides a Data Ready signal to the receiver register 225 and the interrupt register 305. The transmitter register 230 outputs its data to the output data formatter 235 comprised of digital logic, which supplies the output data 140 and the osc enable 130 signal to the transmitter 80.

The interrupt register 305 receives four interrupts, data ready, install mode, alarm, and normal mode. The data ready interrupt signals the processor 200 to read input data from the receiver register 225. The install mode switch S1 interrupt signals the processor 200 go into install mode. The alarm switch S2 interrupt signals the processor 200 to output an alarm received message through the transmitter register 230. Lastly, normal mode interrupt from Install Timer 300 signals the processor 200 to go into normal mode from install mode.

The status register 220 storage includes the status of the wireless devices, the status of enable alarm, and the mode, normal or install. Lastly, the control register 210 controls the input and output power level of the receiver 90 and the transmitter 80, via the power control signal 120. This signal also initiates the install timer 300.

The details of the operation of each specific circuit are well known to those skilled in the art and are not described.

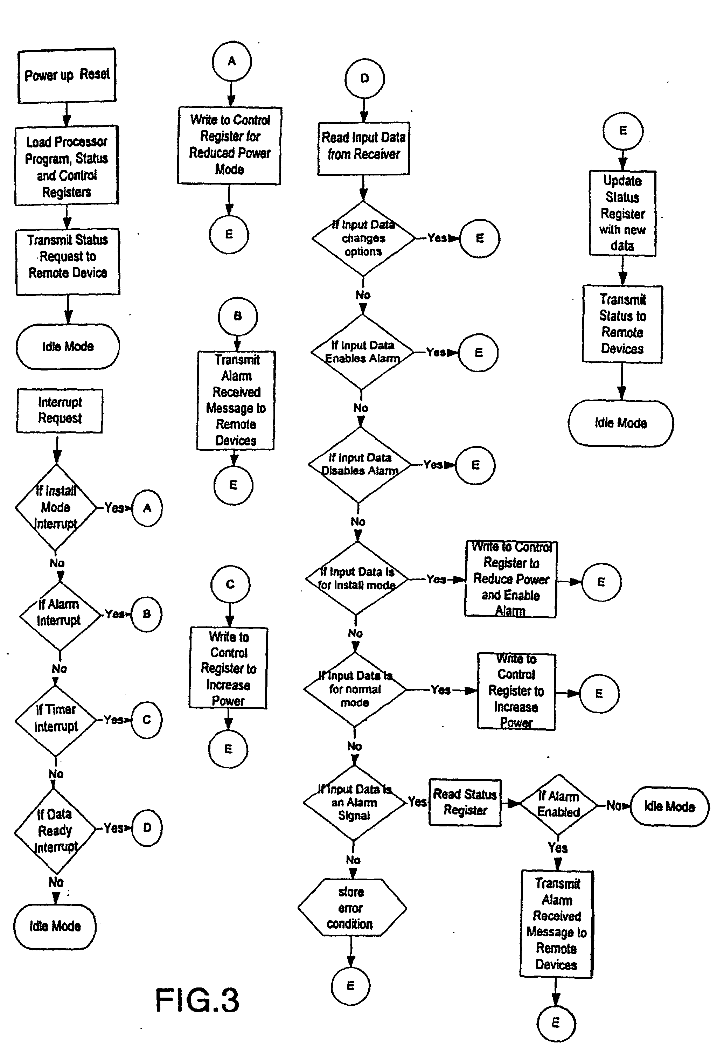

Figure 3 shows the flow chart of the central system controller 70. Upon Power up Reset the processor, 200 in figure 2, performs a typical start up routine such as loading the processor program, resetting hardware and loading the control register. This is well known to those skilled in the art. The processor 200 also transmits a status request to the wireless devices and goes into an idle mode to wait for an interrupt. Upon an interrupt request, the processor 200 performs an interrupt routine which includes reading the interrupt register 305. If the processor 200 determines the interrupt was from the install mode Switch S1, it writes to the control register 210 changing the logic level of the Power Control signal 120 from a logic 1 to a logic 0. If the processor 200 determines the interrupt was from the alarm switch S2, it transmits an alarm received message to the wireless devices via transmitter register 230. If the processor 200 determines the interrupt was from the timer, it writes to the control register 210 changing the logic level of the Power Control signal 120 from a logic 0 to a logic 1. Lastly, if the processor 200 determines the interrupt was from the data ready interrupt, it reads the data from the receiver register 225. The input data is decoded, and the processor 200 determines if there should be a change in the options stored by the status register 220, if the alarm mode should be enabled or disabled, if the transmitter and receiver should be in the reduced power installation mode or the normal power mode, or if the input data is an alarm signal. If the input data is an alarm signal, the status register 220 is read to determine if the alarm mode is enabled. If it is not enabled, the transmission is ignored. If it is enabled, the processor 200 transmits an alarm received message to the wireless devices via the transmitter register 230. If the input data is erroneous an error is stored in the status register 220, and a message is transmitted to the wireless devices. The status register 220 is also updated after any changes have been performed to the alarm system and status messages are sent to the devices. The details of each processing step would be well known to someone skilled in the art. This flow chart does not include all the processes necessary for an alarm systems total operation, only processes pertinent to the present invention.

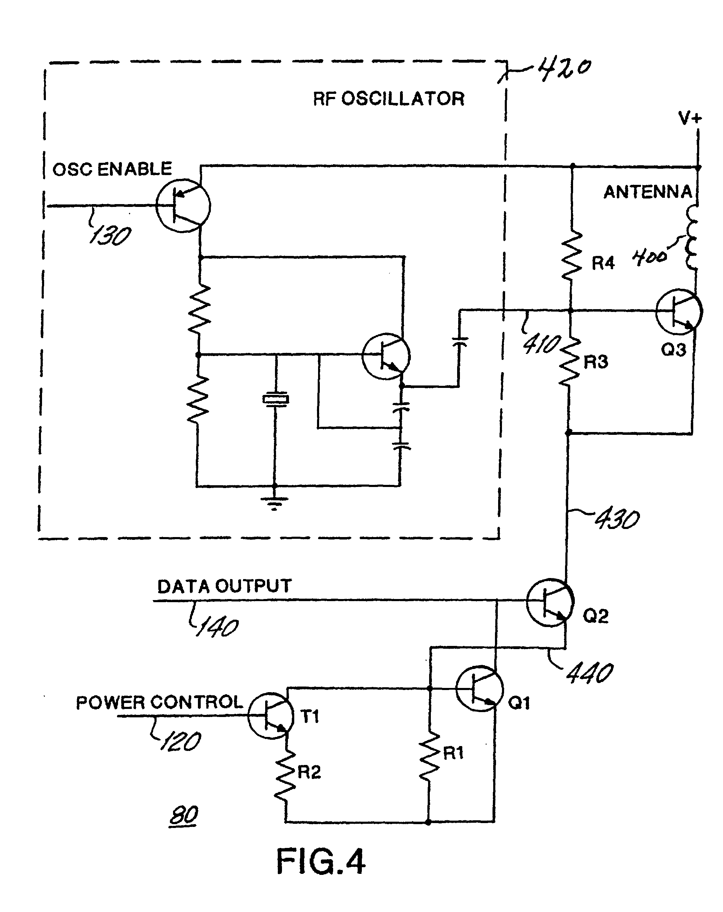

Figure 4 shows a detailed implementation of the power control feature of the central transmitter 80. The central transmitter 80 output, from antenna 400, is controlled by power amplifier Q3. Decreased current through Q3 causes decreased output transmission power. The current through Q3 is controlled by three sources: current source 440, data signal 430 and RF signal 410. The current source 440, which is equal to the current through R1, is controlled by the Power Control signal 120. When the Power Control signal 120 is at a logic level 1, R2 is active and the current through R1 is increased. When the Power Control signal 120 is at a logic level 0, R2 is switched out of the circuit via T1, and the current through R1 is decreased.

The data signal 430 modulates Q3 according to the logic level of Data Output signal 140, and the RF signal 410 is amplified by Q3. The RF is from RF oscillator 420, which is enabled by the Osc Enable signal 130. RF modulation of data signals and the electrical components of this circuit are well known to one skilled in the art.

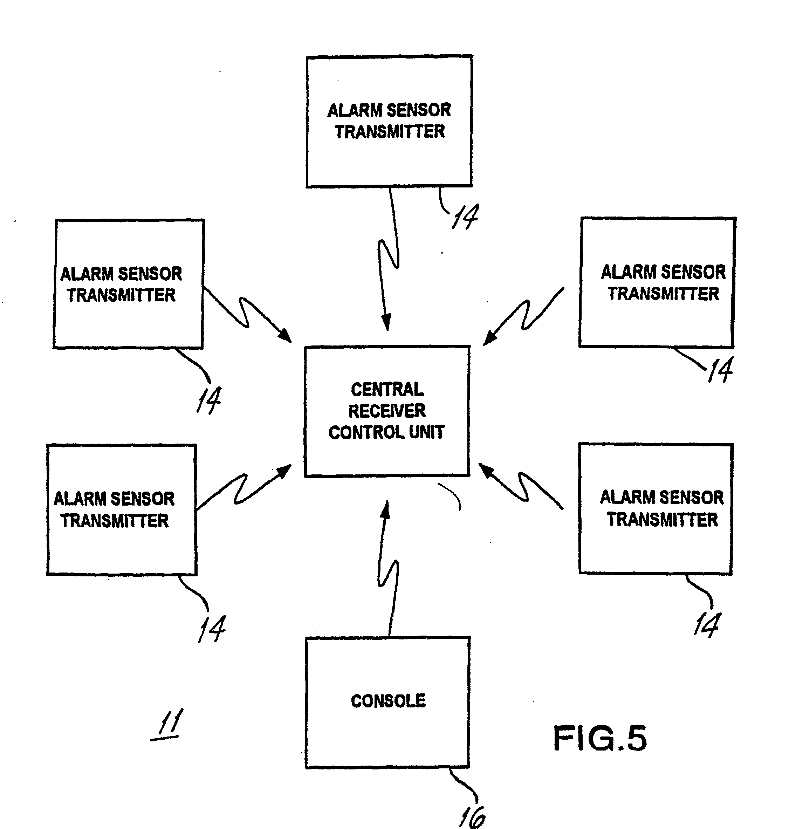

In accordance with the second aspect of the invention, Fig. 5 illustrates a block diagram of an alarm system 11, which comprises a central receiver control unit 12, a plurality of alarm sensor transmitters 14, and a console 16. The central receiver control unit 12 is in communication with the plurality of alarm sensor transmitter 14, each of which comprise an alarm sensor and a transmitter. The alarm sensor transmitters 14 are well known in the art and comprise, for example, motion detectors, fire or smoke sensors, glass breakage detectors, door or window entry sensors, and similar sensors. In the preferred embodiment, the alarm system 11 operates in a wireless fashion by electromagnetic wave transmission (e.g., radio frequency waves) between the alarm sensor transmitters 14 and the central receiver control unit 12. The transmitters within each alarm sensor transmitter 14 are also well known in the art, and transmit supervisory and alarm messages which modulate a radio frequency signal (e.g., 345 MHz). The modulated radio frequency signal is received, processed and decoded by the central receiver control unit 12, enabling the central receiver control unit 12 access to be provided with the information contained within the supervisory or alarm message and act accordingly (e.g., by sounding an alarm speaker, dialing the police or fire station, etc.). Further detail regarding wireless alarm systems may be found in U.S. Patent No. 4,754,261 to Marino, which is owned by the assignee of the present invention and is hereby incorporated by reference.

The alarm sensor transmitters 14 are designed to transmit supervisory messages and alarm messages indicating the status of the alarm sensors in accordance with protocols well known in the art. The supervisory message functions to provide a periodic and continuous Built-in-Test (BIT) capability which ensures that communication between each alarm sensor transmitter 14 and the central receiver control unit 12 is operative. Since it is possible in this type of system that an alarm sensor transmitter 14 may only transmit an alarm signal during a health, safety or security emergency (e.g., when a window associated with the sensor is broken), it is imperative that the alarm system 11 maintain a periodic method of ensuring the communication link between each of the alarm sensor transmitters 14 and the central receiver control unit 12 is operative so that potential problems may be attended to promptly at non-critical moments.

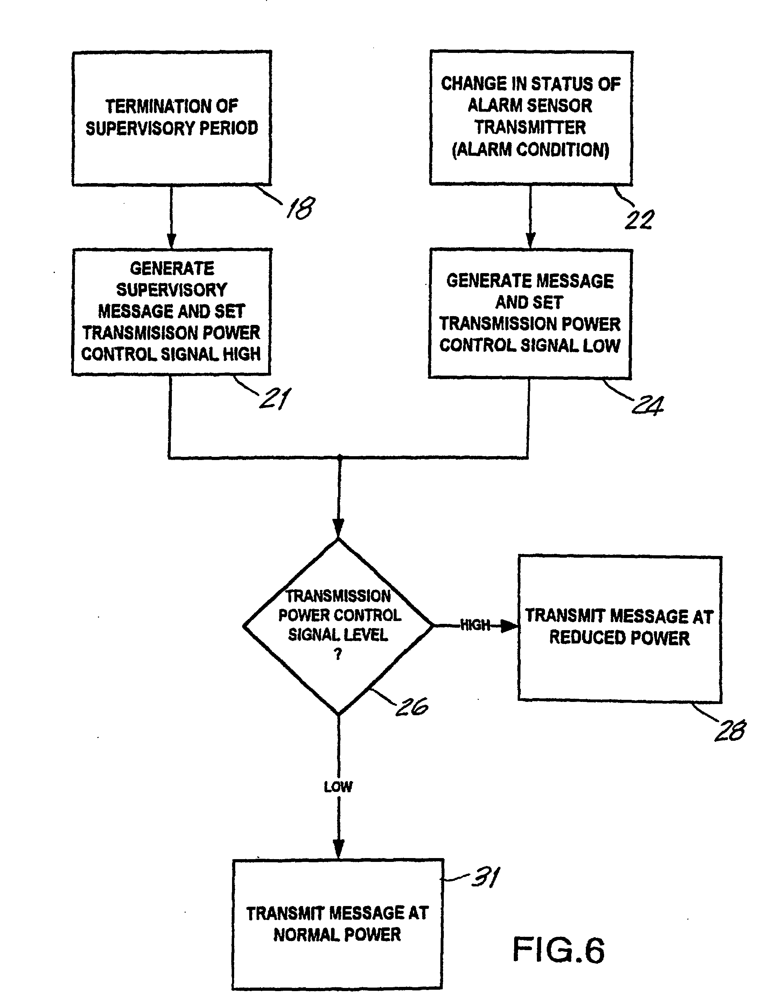

Fig. 6 illustrates a method utilized by the alarm sensor transmitters 14 to determine when to reduce the transmitted power (i.e. upon termination of a supervision signal). Upon termination of the supervisory period (defined below) in step 18, a supervisory period termination signal will be generated which will in turn prompt the generation of the supervisory message in step 21. A transmission power control signal will simultaneously be set high (i.e. logic 1) indicating that the supervisory message should be transmitted at a reduced power level. However, if the supervisory period has not terminated yet and there has been a change in the status of one or more of the alarm sensor transmitters 14 (i.e., a non-supervisory condition) in step 22 then a non-supervisory message (an alarm message) will be generated in step 24 and the transmission power control signal will be set to low (logic 0). Naturally, the sense of the transmission power control signal is arbitrary, as long as it is defined in advance and the intended tasks take place accordingly in response to a given sense. Just prior to transmission, the transmitter will examine the transmission power control signal in decision 26 and if it is high (indicating that the message is a supervisory message), then the transmitter will transmit the message at a predetermined reduced power level in step 28. However, if the transmission power control signal is low (indicating that the message is a non-supervisory message), then the transmitter will transmit the message at a predetermined normal or maximum power level in step 31.

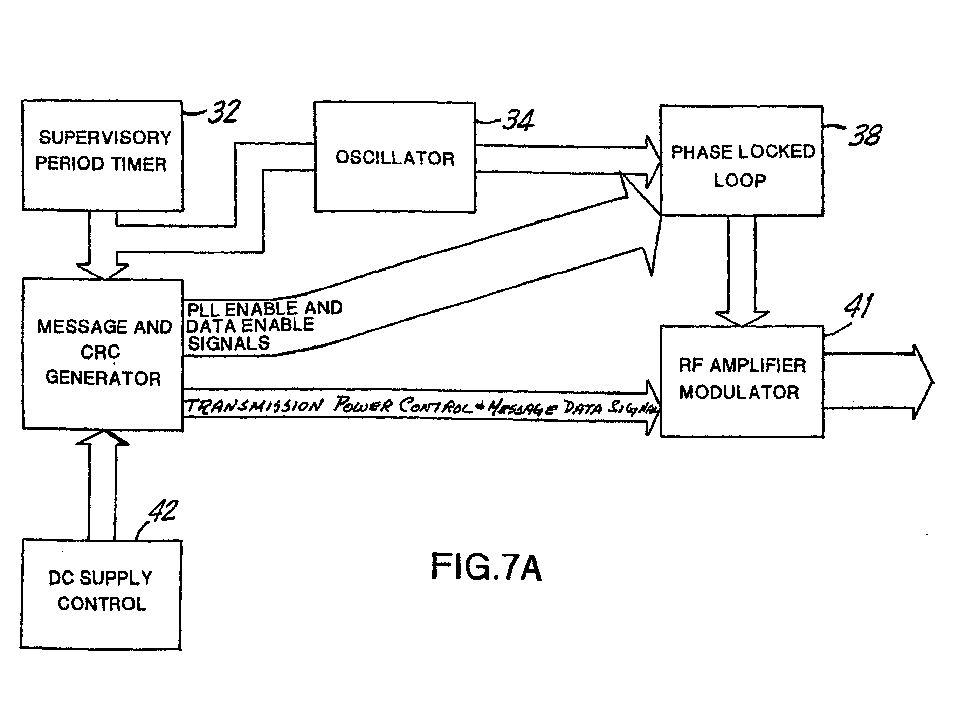

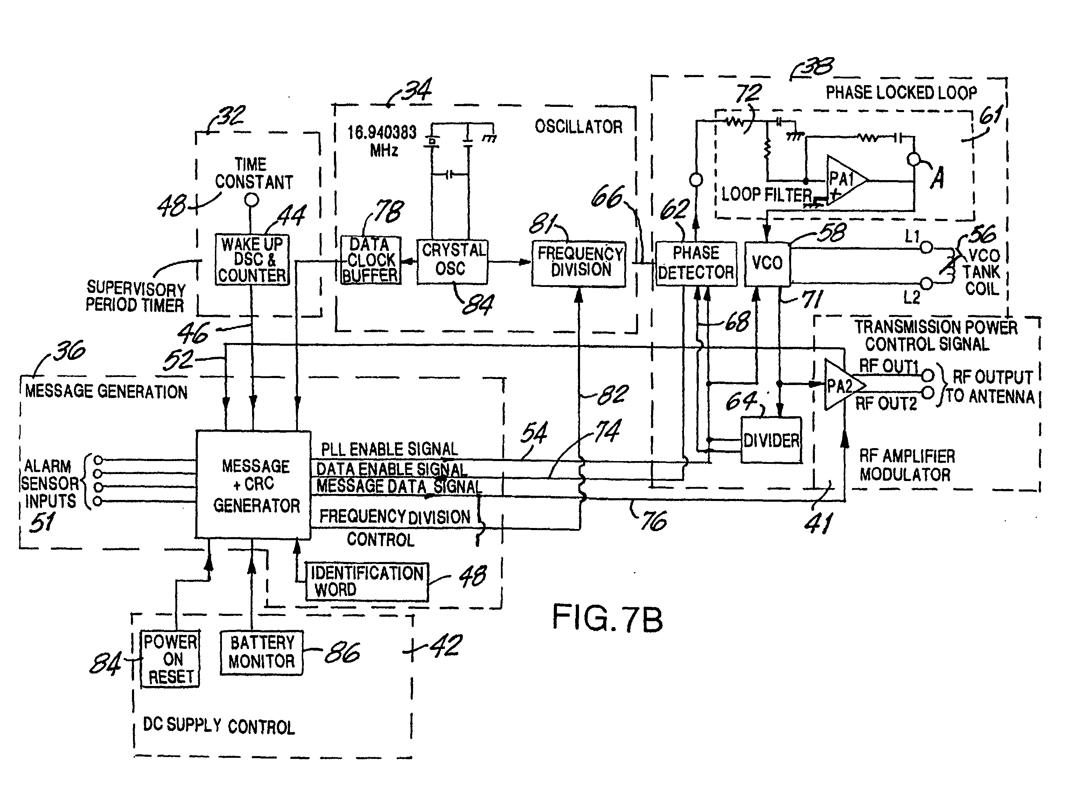

Figs. 7A and 7B illustrate detailed top-level block diagrams of some of the essential functions of the alarm sensor transmitter 14 comprising a supervisory period timer function 32, an oscillator function 34, a message generation function 36, a phase locked loop function 38, a radio frequency (RF) amplifier modulator function 41, and a DC supply control 42. The supervisory period timer 32 comprises a wake-up oscillator and counter 44 that runs continuously and counts the passage of time. Whenever a period of time corresponding to the supervisory period has elapsed, then the wake-up oscillator and counter 44 will output a supervisory period termination signal 46 to the message generation function 36. The length of time corresponding to the supervisory period is fixed by a time constant 48 that may comprise a circuit comprising resistors and capacitors, a crystal, a resonator or other alternative components well known in the art. The length of the supervisory period is typically on the order of one hour or less according to applicable national regulations.

Upon receipt of the supervisory period termination signal by the message generation function 36, the supervisory message is synthesized from a unique identification word 48 stored in non-volatile memory, a Cyclic Redundancy Check (CRC) sequence, and a status byte formed from various external status inputs comprising alarm sensor inputs 51. The unique identification word 48 identifies the source of the supervisory message as coming from a particular alarm sensor transmitter 14. The CRC sequence is provided for error detection and is well known in the art (see for example w. Stallings Data and Computer Communications 101-110 (1985), which is hereby incorporated by reference). In addition, since the supervisory message is being transmitted, the transmission power control signal 52 transitions to a high state that is then used to control the transmission power established in the RF amplifier modulator function 41. Conversely, if a non-supervisory message (an alarm message) is being generated in response to a change in the status of one or more alarm sensor inputs 51, then the transmission power control 52 signal would maintain or transition to a low state which will cause the RF amplifier modulator function 41 to transmit the non-supervisory message at the predetermined normal or maximum power level.

Prior to outputting the generated message, the message generation function 36 will enable the phase locked loop function 38 using a PLL ENABLE signal 54. Conceptually, phase locked loop circuits utilize feedback to maintain an output signal in a specific phase relationship to a reference signal. Here the phase locked loop function 38 serves to maintain the phase difference between the oscillator function 34 and the signal that is modulated by the message data signal 76. The modulated signal of VCO output signal 71 is typically between 417 MHz and 433 Mhz. The phase locked loop function 38 is comprised of a voltage-controlled oscillator (VCO) 58, a loop filter 61, a phase detector 62 and a divider 64. The phase detector 62 comprises a device that produces an output voltage proportional to the phase difference between an phase detection clock 66 and a divider output signal 68. The VCO 58 is a circuit that produces a VCO output signal 71 whose frequency is proportional to the loop filter voltage at node A. The divider 64 is a device that produces a divider output signal 68 whose frequency is an integer division of the VCO output signal 71. The loop filter 72 is a circuit that is used to shape the overall response of the phase locked loop function 38. The loop filter illustrated in Figs. 3 and 3B is an active loop filter comprising an operational amplifier PA1 and additional discrete resistors and capacitors. When the phase locked loop 38 is locked it issues a DATA ENABLE signal 74 to the message generation function 36 which enables the transmission of the generated message or message data signal 76 to the RF amplifier modulator function 41.

The RF amplifier modulator function 41 modulates the VCO output signal 71 with the message data signal 76 and outputs the resulting modulated signal to an antenna. In the embodiment illustrated in Figs. 3A and 3B, it is anticipated that On-Off Keying would be utilized, which essentially varies the amplitude of the carrier between zero and a predetermined amplitude in response to the message data signal 76. However, alternative methods of modulation such as Frequency-Shift Keying and Phase-Shift Keying could be employed while still remaining within the scope of the present invention.

The oscillator function 34 provides the message generation function 36 with a data clock via a data clock buffer 78 and a crystal oscillator 84 which is used for a general system clock as well as synchronization of the output data stream on the message data signal 76. The oscillator function 34 also provides the phase locked loop function 38 with the phase detection clock 66 after a frequency division function 81 controlled by a frequency division control signal 82 from the message generator function 36. The oscillator output reference clock is used as a phase reference which the phase locked loop function 38 bases the phase of the VCO output signal 71 on.

The DC supply control 42 comprises a power-on reset function 84, and a battery monitor function 86. The power-on reset function 84 provides a stable reset signal to the message generation function 36 in order to permit the orderly initialization of registers, clocks and voltage levels upon applying power to various circuits of the alarm sensor transmitter 14. The battery monitor function 86 ensures that the voltage of a battery used as the primary power source meets operating specifications and if not informs the message generation function 36 of that fact via the status portion of the message or equivalent means well known in the art.

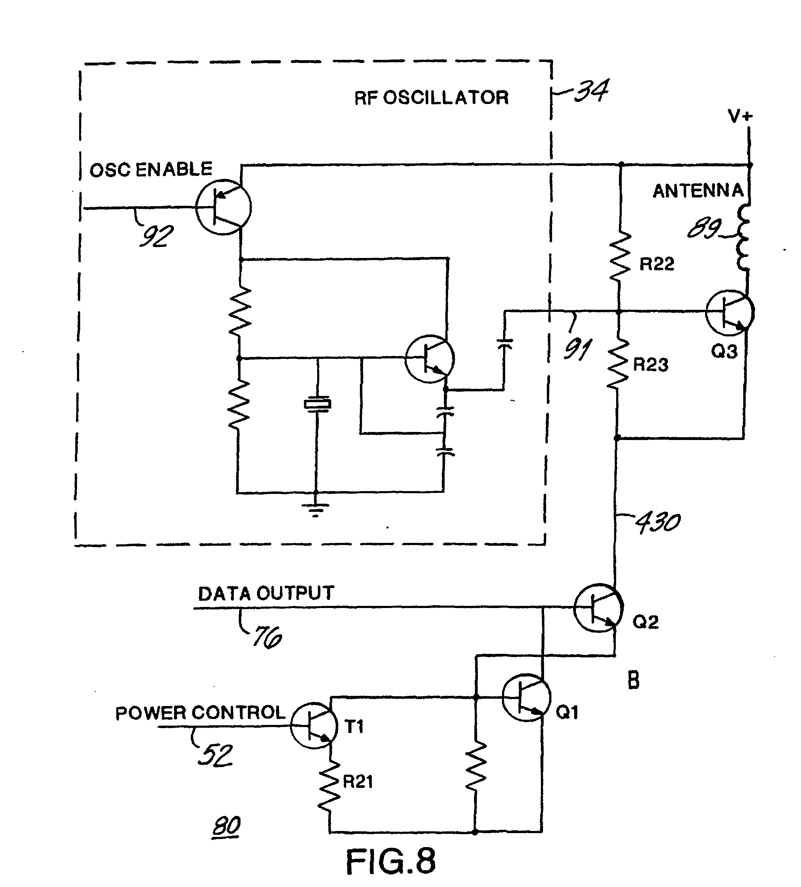

Fig. 8 illustrates an alternative embodiment of the oscillator function 34 and the RF amplifier function 41. The transmission power control signal 52 is used to switch a resistor R21 into or out of the circuit. Switching resistor R1 into the circuit operates to increase the current through a current source defined by transistors Q1 and Q2. Q1 and Q2 operate to maintain approximately 0.6v across resistor R1 and, therefore, the value of resistor R21 determines the current through the RF amplifier modulator function 88. Transistors Q1 and Q2 operate as a regulator since the power amplifier defined by transistor Q3, and resistors R22 and R23 as well as the antenna 89 are at a constant DC load. Thus, when resistor R1 is switched into or out of the circuit, the voltage across the power amp increases or decreases to vary output power. The oscillator function 34 provides an RF signal 91 (similar to the VCO output signal 71 of Figs. 7A and 7B) which is enabled by an oscillator enable signal 92 and modulated by the message data signal 76 in a substantially similar manner as described with respect to Figs. 7A and 7B. Thus, by varying the transmission power control signal 52 alarm (non-supervisory) messages may be transmitted, received and processed at full system power, and all supervisory messages are subject to a reduction in transmitter effective radiated power thus ensuring adequate system margin.

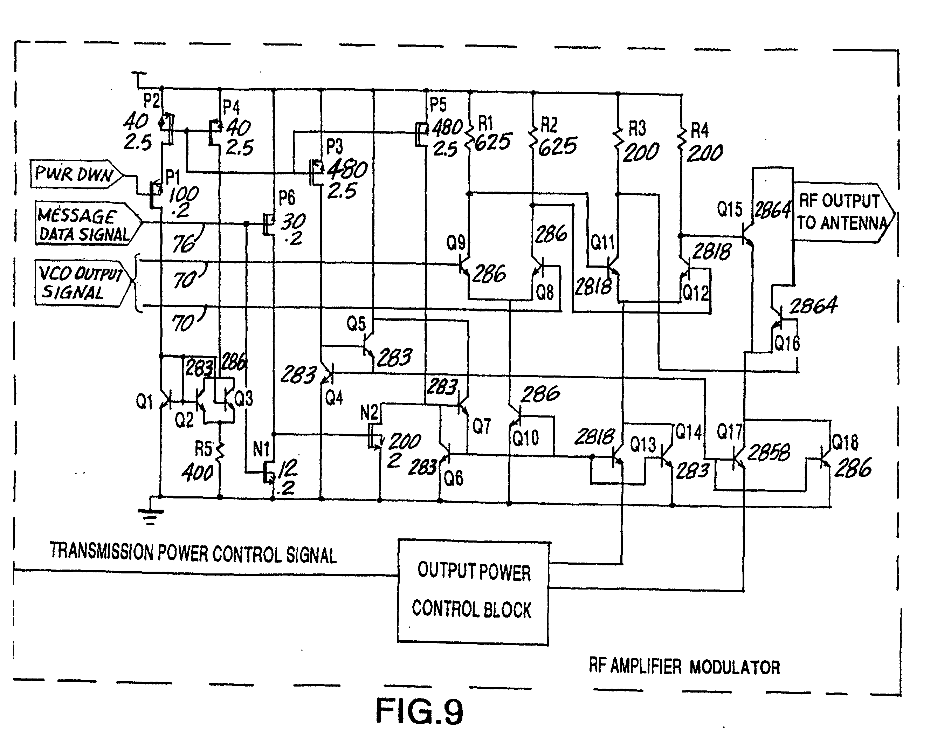

Fig. 9 illustrates a schematic representation of a second embodiment of the RF amplifier modulator function of Fig. 6. In addition to reference designations the individual components have been annotated with information regarding part numbers and values. In this embodiment the transmission power control signal 52 is used to control the output power by alternately connecting and disconnecting transistors Q13 and Q17. In order to achieve a low power transmission during supervisory messages both Q13 and Q17 will be disconnected via circuitry-well known in the art contained in an output power control block.

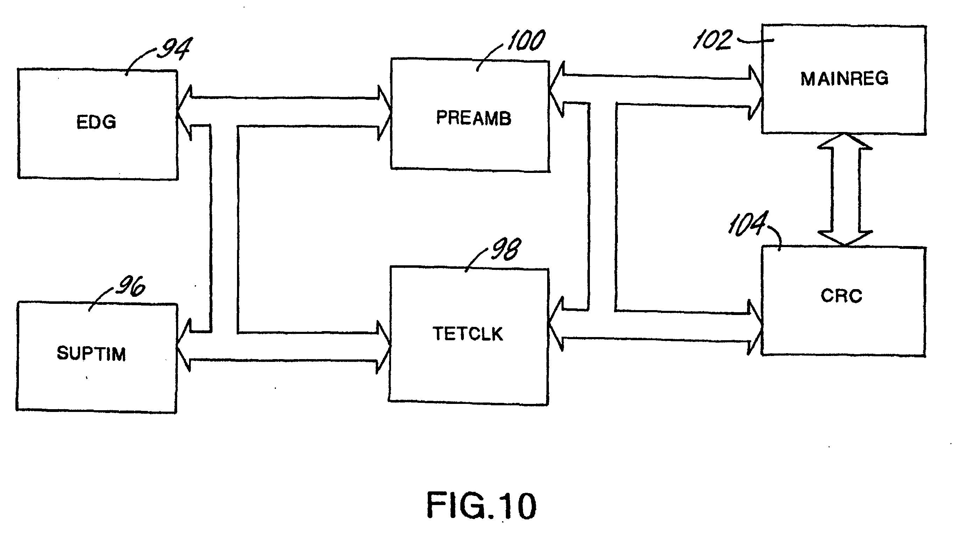

Fig. 10 illustrates a hierarchical functional block diagram of an alternate embodiment of the message and CRC generator block 36 of Figs. 7A and 7B. Each *of* the *blocks* represents additional circuitry (not shown) that carries out the particular functions of that block. This additional circuitry would typically take the form of discrete analog and digital components, primitives within an ASIC or equivalent means well known in the art. An EDG block 94 is responsible for assembling status bits in order to construct the alarm status message. A SUPTIM block 96 monitors the output from the supervisory period timer 32 shown in Figs. 7A and 7B. A TETCLK block 98 provides clock, timing, and control signals for the message and CRC generator. A PREAMB block 100 assembles the preamble of the various supervisory and non-supervisory messages generated by the message and CRC generator. A MAINREG block 102 provides the identification word unique to each alarm sensor transmitter and embedded in the supervisory message. A CRC block 104 provides error checking on the messages.

The method of the present invention does not rely for its success on multiple supervisory or alarm messages to be sent at each alarm event, nor is this method adversely effected by multiple transmissions. In addition, this method does not require a specific supervisory bit in the data transmitted. The embodiment described with reference to Fig. 6 may be realized in a fully integrated Application Specific Integrated Circuit (ASIC) containing each of the functions illustrated in Fig. 6. Those skilled in the art will recognize that the present invention could also be implemented using discrete circuitry with associated cost and total circuit area penalties.

Thus, while particular embodiments of the present invention have been shown and described, various modifications will be apparent to those skilled in the art, and therefore it is not intended that the invention be limited to the disclosed embodiment or to details thereof and departures may be made therefrom within the scope of the present claims.

## Claims

1. A method for installing an alarm system comprising the steps of:
a) initiating an install mode in a central control unit (10),
b) transmitting from a transmitter (80) a message at a reduced power level with respect to a normal operating power level,
c) receiving, at a wireless device (20), said reduced power message, said wireless device being relocatable with respect to said transmitter (80), and,
d) indicating when said reduced power message is successfully received, or if said reduced power message is not successfully received, then
e) relocating said wireless device (20),
f) transmitting from said transmitter (80) a message at a reduced power level with respect to a normal operating power level,
g) receiving, at said wireless device (20), said reduced power message, said wireless device (20) being relocatable with respect to said transmitter (80), and,
h) indicating when said reduced power message is successfully received.

2. The method of claim 1 wherein the reduced power message is a reduced power alarm received message.

3. The method of claim 1 wherein the reduced power message is a reduced power status message.

4. The method of claim 2 wherein the step of transmitting an alarm received message is in response to a receipt of an alarm activation signal from a device (60).

5. The method of claim 4 wherein said alarm activation signal is received by a receiver (90) at reduced sensitivity.

6. The method of claim 5 wherein the step of transmitting a reduced power status message is in response to a receipt of a status request message from a user interface device (40).

7. The method of claim 6 wherein said status request message is received by a receiver (90) at reduced sensitivity.

8. A alarm system comprising:
a) a central control unit (10) adapted to operate in an install mode, said central control unit comprising transmission means (80) for transmitting during said install mode a message at a reduced power level with respect to a normal operating power level, and
b) a wireless device (20) comprising:
(i) a receiver for receiving said reduced power message, and,
(ii) means for indicating when said reduced power message is successfully received,
said wireless device (20) being relocatable with respect to said transmitter means, and further comprising a user interface device (40), said user interface device (40) comprising input means for entering user input codes, wherein said wireless user interface device further comprises means adapted for receiving said reduced power message and a status output means for identifying when said reduced power message is successfully received..

9. The system of claim 8 wherein said user interface device is wireless and further comprises output means for sending a message from said wireless user interface device to said central control unit, and wherein said central control unit further comprises means (90) for receiving said message from said user interface device.

10. The system of claim 9 wherein said message is an install mode command which initiates said install mode in said central control unit (10).

11. The system of claim 8 wherein said message is a status request message which initiates said central control unit (10) to transmit a status message.

12. The system of claim 8 wherein said central control unit (10) further comprises means (90) for receiving an alarm activation signal, wherein said alarm activation signal initiates a transmission of an alarm received message from said transmission means (80) to said wireless device receiver.

13. The system of claim 8 wherein receiving means (90) is adapted to receive an alarm activation signal at reduced sensitivity during said install mode.

14. The system of claim 11 wherein receiving means (90) is adapted to receive status request messages at reduced sensitivity during said install mode.

15. The system of claim 8 wherein said wireless device is a wireless hand-held user interface device (50), and wherein said means for indicating when said reduced power message is successfully received is a status output means.

16. The system of claim 8 wherein said central control unit (10) comprises a processor (200), said processor being adapted to output a control signal to said transmission means (80) upon initiation of said install mode to reduce said transmission means output power level.

17. The system of claim 8 wherein said central control unit (10) further comprises means for receiving an alarm activation signal (90), wherein said alarm activation signal initiates a transmission of an alarm received message from said transmission means (80) to said wireless device receiver, and wherein said wireless hand-held user interface device (50) is adapted to transmit said alarm activation signal.

18. A method for periodically self-testing a communications path in wireless alarm systems, which comprises:
timing a supervisory period to provide a delay between transmissions of supervisory messages;
generating a supervisory message;
generating a transmission power control signal comprising one of at least two states upon termination of said supervisory period; and
transmitting said supervisory message at a reduced power level as indicated by said state of said transmission power control signal.

19. The method of claim 18, further comprising:
generating an alarm status message in response to receipt of an alarm status signal from an alarm sensor;
generating said transmission power control signal in response to receipt of said alarm status signal from said alarm sensor; and
transmitting said alarm status message at a normal power level as indicated by said state of said transmission power control signal.

20. An apparatus for periodically self-testing a communications path in wireless alarm systems, which comprises:
supervisory period timing means (32) for timing a duration of a supervisory period existing between transmissions of supervisory messages;
means (32) for outputting a supervisory period termination signal upon termination of said supervisory period;
message generation means (36) for generating said supervisory message and a transmission power control signal, said transmission power control signal comprising one of at least two states; and
transmission means (41) for transmitting said supervisory message at a predetermined reduced power level in response to a first state of said transmission power control signal.

21. The apparatus of claim 20, wherein said message generation means (36) further comprises means for generating an alarm status message and said transmission power control signal in response to receipt of an alarm status signal from an alarm sensor.

22. The apparatus of claim 21, wherein said transmission means (41) transmits said alarm status message at a predetermined normal power level in response to said state of said transmission power control signal.

23. The apparatus of claim 20, further comprising oscillator means (34) for outputting a data clock signal which synchronizes said message generation means (36) and a phase detection clock signal which synchronizes said transmission means (41).

24. The apparatus of claim 23, further comprising phase locking means (38) for substantially maintaining correlation between a phase of a transmission signal with a phase of said phase detection signal.

25. The apparatus of claim 24, wherein said transmission means (41) modulates said transmission signal with said generated supervisory message and outputs said modulated transmission signal.

26. An alarm sensor transmitter for use in a wireless alarm system, which comprises:
a supervisory period timer (32) which times a duration of a supervisory period existing between transmissions of supervisory messages and outputs a supervisory period termination signal upon termination of said supervisory period;
a message generator (36) which generates said supervisory message and a transmission power control signal in response to said supervisory period termination signal, said transmission power control signal comprising at least two states, said message generator (36) generating an alarm status message and said transmission power control signal in response to receipt of an alarm status signal from an alarm sensor;
a radio frequency transmitter (41) which transmits said supervisory message at a predetermined reduced power level in response to said state of said transmission power control signal and transmits said alarm status message at a predetermined normal power level in response to said state of said transmission power control signal, said radio frequency transmitter (41) modulating said transmission signal with said generated supervisory message and said alarm status message and outputting said modulated transmission signal;
an oscillator (34) which outputs a data clock signal for synchronizing said message generator and a phase detection clock signal for synchronizing said radio frequency transmitter (41), said data clock signal and said phase detection clock signal being substantially in phase with each other; and
a phase lock loop circuit (38) which substantially maintains correlation between a phase of said transmission signal and a phase of said phase detection clock signal.

## Patentansprüche

1. Verfahren zur Installation eines Alarmsystems, folgende Schritte umfassend:
a) Initiieren eines Installationsmodus in einer zentralen Steuerungseinheit (10),
b) Übertragen einer Meldung von einem Sender (80) auf einem bezogen auf ein normales Betriebsenergieniveau reduzierten Energieniveau,
c) Empfangen der Minderenergie-Meldang an einer drahtlosen Vorrichtung (20), wobei dis drahtlose Vorrichtung in Bezug auf den Sender (80) verschiebbar ist, und
d) Anzeigen, wenn die Minderenergie-Meldung erfolgreich empfangen wurde, oder wenn die Minderenergie-Meldung nicht erfolgreich empfangen wurde, dann
e) Verschieben der drahtlosen Vorrichtung (20),
f) Übertragen einer Meldung von dem Sender (80) auf einem bezogen auf ein normales Betriebsenergieniveau reduzierten Energieniveau,
g) Empfangen der Minderenergie-Meldung an der drahtlosen Vorrichtung (20), wobei die drahtlose Vorrichtung (20) in Bezug auf den Sender (80) verschiebbar ist, und
h) Anzeigen, wenn die Minderenergie-Meldung erfolgreich empfangen wurde.

2. Verfahren nach Anspruch 1, wobei die Minderenergie-Meldung eine Minderenergie-Alarm-Emfangen-Meldung ist.

3. Verfahren nach Anspruch 1, wobei die Minderenergie-Meldung eine Minderenergie-Zustandsmeldung ist.

4. Verfahren nach Anspruch 2, wobei der Schritt des Übertragens einer Alarm-Emfangen-Meldung in Reaktion auf den Empfang eines Alarm-Aktivierungssignals von einer Vorrichtung (60) erfolgt.

5. Verfahren nach Anspruch 4, wobei das Alarm-Aktivierungssignal durch einen Empfänger (90) bei reduzierter Empfindlichkeit empfangen wird.

6. Verfahren nach Anspruch 5, wobei der Schritt des Übertragens einer Minderenergie-Zustandsmeldung in Reaktion auf den Empfang einer Zustand-Anforderungsmeldung von einer Benutzerschnittstellenvorrichtung (40) erfolgt.

7. Verfahren nach Anspruch 6, wobei die Zustand-Anforderungsmeldung durch einen Empfänger (90) bei reduzierter Empfindlichkeit empfangen wird.

8. Alarmsystem umfassend:
a) eine zentrale Steuerungseinheit (10), die zum Arbeiten in einem Installationsmodus angepasst ist, wobei die zentrale Steuerungseinheit Sendemittel (80) zum Übertragen einer Meldung auf einem bezogen auf ein normales Betriebsenergieniveau reduzierten Energieniveau im Installationsmodus umfasst, und
b) eine drahtlose Vorrichtung (20) umfassend:
(i) einen Empfänger zum Empfangen der Minderenergie-Meldung, und
(ii) Mittel zum Anzeigen wann die Minderenergie-Meldung erfolgreich empfangen wurde,
wobei die drahtlose Vorrichtung (20) in Bezug auf die Sendermittel verschiebbar ist, und weiterhin umfassend eine Benutzerschnittstellenvorrichtung (40), wobei die Benutzerschnittstellenvorrichtung (40) Eingabemittel zur Eingabe von Benutzer-Eingabe-Codes umfasst, wobei die drahtlose Benutzerschnittstellenvorrichtung ferner Mittel umfasst, die zum Empfangen der Minderenergie-Meldung angepasst sind, und Zustand-Ausgabemittel zur Kennzeichnung wann die Minderenergie-Meldung erfolgreich empfangen wurde.

9. System nach Anspruch 8, wobei die Benutzerschnittstellenvorrichtung drahtlos ist und ferner Ausgabemittel zum Senden einer Meldung von der drahtlosen Benutzerschnittstellenvorrichtung zu der zentralen Steuerungseinheit umfasst, und wobei die zentrale Steuerungseinheit ferner Mittel (90) zum Empfangen der Meldung von der Benutzerschnittstellenvorrichtung umfasst.

10. System nach Anspruch 9, wobei die Meldung ein Installations-Modus-Kommando ist, welches den Installations-Modus in der zentralen Steuerungseinheit (10) initiiert.

11. System nach Anspruch 8, wobei die Meldung eine Zustand-Anforderungsmeldung ist, welche die zentrale Steuerungsemheit (10) zum Übertragen einer Zustandsmeldung veranlasst.

12. System nach Anspruch 8, wobei die zentrale Steuerungseinheit (10) ferner Mittel (90) zum Empfangen eines Alarm-Aktivierungssignals umfasst, wobei das Alarm-Aktivierungssignal eine Übertragung eines Alarm-Empfangen-Signals von den Sendemitteln (80) zu der drahtlosen Empfangsvorrichtung initiiert.

13. System nach Anspruch 8, wobei Empfangsmittel (90) zum Empfangen eines Alarm-Aktivierungssignals bei reduzierter Empfindlichkeit im Installations-Modus angepasst sind.

14. System nach Anspruch 11, wobei Empfangsmittel (90) zum Empfangen einer Zustand-Anforderungsmeldung bei reduzierter Empfindlichkeit im Installations-Modus angepasst sind.

15. System nach Anspruch 8, wobei die drahtlose Vorrichtung eine drahtlose Hand-Benutzerschnittstellenvorrichtung (50) ist, und wobei die Mittel zum Anzeigen wann die Minderenergie-Meldung erfolgreich empfangen wurde Zustand-Ausgabemittel sind.

16. System nach Anspruch 8, wobei die zentrale Steuerungseinheit (10) einen Prozessor (200) umfasst, wobei der Prozessor zum Ausgeben eines Steuerungssignals an die Sendemittel (80) bei der Initiierung des Installations-Modus zur Reduktion des Ausgangs-Energie-Niveaus der Sendemittel angepasst ist.

17. System nach Anspruch 8, wobei die zentrale Steuerungseinheit (10) ferner Mittel zum Empfangen eines Alarm-Aktivierungssignals (90) umfasst, wobei das Alarm-Aktivierungssignal eine Übertragung eines Alarm-Empfangen-Signals von den Sendemitteln (80) an die drahtlose Empfangsvorrichtung initiiert, und wobei die drahtlose Hand-Benutzerschnittstellenvorrichtung (50) zum Übertragen des Alarm-Aktivierungssignals angepasst ist.

18. Verfahren für den perivdischen Selbsttest eines Kommunikationspfades in drahtlosen Alarmsystemen, welches umfasst:
Einstellen einer Überwachungsperiode um eine Verzögerung zwischen Übertragungen von Überwachungsmeldungen bereitzustellen;
Erzeugen einer Überwachungsmeldung;
Erzeugen eines Sendeenergie-Steuerungssignals, welches nach Beendigung der Überwachungsperiode einen von wenigstens zwei Zuständen umfasst; und
Übertragen der Überwachungsmeldung auf einem reduzierten Energieniveau, wie durch den Zustand des Sendeenergie-Steuerungssignals angezeigt.

19. Verfahren nach Anspruch 18, ferner umfassend:
Erzengen einer Alarm-Zustandsmeldung als Reaktion auf den Empfang eines Alarm-Zustandssignals von einem Alarm-Sensor;
Erzeugen des Sendeenergie-Steuerungssignals als Reaktion auf den Empfang des Alarm-Zustandssignals von dem Alarm-Sensor; und
Übertragen der Alarm-Zustandsmeldung auf einem normalen Energieniveau, wie durch den Zustand des Sendeenergie-Steuerungssignals angezeigt

20. Vorrichtung für den periodischen Selbsttest eines Kommunikationspfades in drahtlosen Alarmsystemen, welche umfasst:
Überwachungsperioden-Einstellungs-Mittel (32) zum Einstellen der Dauer einer zwischen Übertragungen von Überwachungsmeldungen existierenden Überwachungsperiode;
Mittel (32) zum Ausgeben eines Überwachungsperioden-Ende-Signals nach Beendigung der Überwachungsperiode;
Meldung-Erzeugungsmittel (36) zum Erzeugen der Überwachungsmeldung und eines Sendeenergie-Steuerungssignals, wobei das Sendeenergie-Steuerungssignal einen von wenigstens zwei Zuständen umfasst; und
Sendemittel (41) zum Übertragen der Überwachungsmeldung auf einem vorbestimmten reduzierten Energieniveau in Reaktion auf einen ersten Zustand des Sendeenergie-Steuerungssignals.

21. Vorrichtung nach Anspruch 20, wobei die Meldung-Erzeugungsmittel (36) ferner Mittel zum Erzeugen einer Alarm-Zustandsmeldung und des Sendeenergie-Steuerungssignals in Reaktion auf den Empfang eines Alarm-Zustandssignals von einem Alarmsensor umfassen.

22. Vorrichtung nach Anspruch 21, wobei die Sendemittel (41) die Alarm-Zustandsmeldung auf einem vorbestimmten normalen Energieniveau in Reaktion auf den Zustand des Sendeenergie-Steuerungssignals übertragen.

23. Vorrichtung nach Anspruch 20, femer umfassend Oszillationsmittel (34) zum Ausgeben eines Daten-Taktsignals, welches die Meldung-Erzeugungsmittel (36) synchronisiert, und eines Phasen-Detektions-Taktsignals, welches die Sendemittel synchronisiert (41).

24. Vorrichtung nach Anspruch 23, femer umfassend Phasen-Synchronisationsmittel (38), um die Korrelation zwischen der Phase eines Sendesignals und der Phase des Phasen-Detektionssignals im Wesentlichen zu erhalten.

25. Vorrichtung nach Anspruch 24, wobei die Sendemittel (41) das Sendesignal mit der erzeugten Überwachungsmeldung modulieren und das modulierte Sendesignal ausgeben.

26. Alarm-Sensor-Sender für den Gebrauch in einem drahtlosen Alarmsystem, welcher umfasst:
einen Überwachungsperioden-Zeitmesser (32), welcher die Dauer einer zwischen Übertragungen von Überwachungsmeldungen existierenden Überwachungsperiode einstellt und ein Überwachungsperioden-Ende-Signal nach Beendigung der Überwachungsperiode ausgibt;
einen Meldungserzeuger (36), welcher die Überwachungsmeldung und ein Sendeenergie-Steuerungssignal in Reaktion auf das Überwachungsperioden-Ende-Signal erzeugt, wobei das Sendeenergie-Steuerungssignal wenigstens zwei Zustände umfasst und der Meldungserzeuger (36) eine Alarm-Zustandsmeldung und das Sendeenergie-Steuerungssignal in Reaktion auf den Empfang eines Alarm-Zustandssignals von einem Alarm-Sensor erzeugt;
einen Hochfrequenz-Sender (41), welcher die Überwachungsmeldung auf einem vorbestimmten reduzierten Energieniveau in Reaktion auf den Zustand des Sendeenergie-Steuerungssignals überträgt und die Alarm-Zustandsmeldung auf einem vorbestimmten normalen Energieniveau in Reaktion auf den Zustand des Sendeenergie-Steuerungssignals überträgt, wobei der Hochfrequenz-Sender (41) das Sendesignal mit der erzeugten Überwachungsmeldung und der Alarm-Zustandsmeldung moduliert und das modulierte Sendesignal ausgibt;
einen Oszillator (34), welcher ein Daten-Taktsignal zum Synchronisieren des Meldungserzeugers und ein Phasen-Detektions-Taktsignal zum Synchronisieren des Hochfrequenz-Senders (41) ausgibt, wobei das Daten-Taktsignal und das Phasen-Detektions-Taktsignal im Wesentlichen miteinander in Phase sind; und
einen Phasenregelkreis (38), welcher die Korrelation zwischen der Phase des Sendesignals und der Phase des Phases-Detektions-Taktsignals im Wesentlichen erhält.

## Revendications

1. Procédé pour installer un système d'alarme comprenant les étapes consistant à :
a) amorcer un mode d'installation dans une unité de commande centrale (10) ;
b) émettre, à partir d'un émetteur (80), un message à un niveau de puissance réduit par rapport à un niveau de puissance en fonctionnement normal ;
c) recevoir, au niveau d'un dispositif sans fil (20), ledit message à puissance réduite, ledit dispositif sans fil étant réadressable en fonction dudit émetteur (80) ; et
d) indiquer quand ledit message à puissance réduite est reçu avec succès, ou si ledit message à puissance réduite n'est pas reçu avec succès, alors
e) réadresser ledit dispositif sans fil (20) ;
f) émettre à partir dudit émetteur (80) un message à un niveau de puissance réduit par rapport à un niveau de puissance en fonctionnement normal ;
g) recevoir, au niveau dudit dispositif sans fil (20), ledit message à puissance réduite, ledit dispositif radioélectrique (20) étant réadressable en fonction dudit émetteur (80) ; et
h) indiquer quand ledit message à puissance réduite est reçu avec succès.

2. Procédé selon la revendication 1, dans lequel le message à puissance réduite est un message reçu par une alarme à puissance réduite.

3. Procédé selon la revendication 1, dans lequel le message à puissance réduite est un message d'état à puissance réduite.

4. Procédé selon la revendication 2, dans lequel l'étape consistant à émettre un message reçu par une alarme est en réponse à la réception d'un signal d'activation d'alarme provenant d'un dispositif (60).

5. Procédé selon la revendication 4, dans lequel ledit signal d'activation d'alarme est reçu par un récepteur (90) à sensibilité réduite.

6. Procédé selon la revendication 5, dans lequel l'étape consistant à émettre un message d'état à puissance réduite est en réponse à la réception d'un message de requête d'état provenant d'un dispositif d'interface utilisateur (40).

7. Procédé selon la revendication 6, dans lequel ledit message de requête d'état est reçu par un récepteur (90) à sensibilité réduite.

8. Système d'alarme comprenant :
a) une unité de commande centrale (10) adaptée pour fonctionner dans un mode d'installation, ladite unité de commande centrale comprenant un moyen d'émission (80) pour émettre pendant ledit mode d'installation un message à un niveau de puissance réduit par rapport à un niveau de puissance en fonctionnement normal ; et
b) un dispositif sans fil (20) comprenant :
i) un récepteur pour recevoir ledit message à puissance réduite ; et
ii) un moyen pour indiquer quand ledit message à puissance réduite est reçu avec succès ;
ledit dispositif sans fil (20) étant ré-adressable en fonction dudit moyen d'émission, et comprenant de plus un dispositif d'interface utilisateur (40), ledit dispositif d'interface utilisateur (40) comprenant un moyen d'entrée pour entrer les codes d'entrée d'un utilisateur, dans lequel ledit dispositif d'interface utilisateur sans fil comprend de plus un moyen adapté pour recevoir ledit message à puissance réduite et un moyen de sortie d'état pour identifier quand ledit message à puissance réduite est reçu avec succès.

9. Système selon la revendication 8, dans lequel ledit dispositif d'interface de l'utilisateur est sans fil et comprend de plus un moyen de sortie pour émettre un message à partir dudit dispositif interface utilisateur sans fil vers ladite unité de commande centrale, et dans lequel ladite unité de commande centrale comprend de plus un moyen (90) pour recevoir ledit message provenant dudit dispositif interface utilisateur.

10. Système selon la revendication 9, dans lequel ledit message est une commande de mode d'installation qui amorce ledit mode d'installation dans ladite unité de commande centrale (10).

11. Système selon la revendication 8, dans lequel ledit message est un message de requête d'état qui amorce ladite unité de commande centrale (10) pour émettre un message d'état.

12. Système selon la revendication 8, dans lequel ladite unité de commande centrale (10), comprend de plus un moyen (90) pour recevoir un signal d'activation d'alarme, dans lequel ledit signal d'activation d'alarme amorce une émission d'un message reçu par une alarme provenant dudit moyen d'émission (80) vers ledit récepteur de dispositif sans fil.

13. Système selon la revendication 8, dans lequel ledit moyen de réception (90) est adapté pour recevoir un signal d'activation d'alarme à sensibilité réduite pendant ledit mode d'installation.

14. Système selon la revendication 11, dans lequel le moyen de réception (90) est adapté pour recevoir des messages de requête d'état à sensibilité réduite pendant ledit mode d'installation.

15. Système selon la revendication 8, dans lequel ledit dispositif sans fil est un dispositif d'interface utilisateur, portatif et sans fil (50), et dans lequel ledit moyen pour indiquer quand ledit message à puissance réduite est reçu avec succès, est un moyen de sortie d'état.

16. Système selon la revendication 8, dans lequel ladite unité de commande centrale (10) comprend un processeur (200), ledit processeur étant adapté pour produire un signal de commande vers ledit moyen d'émission (80) après amorçage dudit mode d'installation pour réduire ledit niveau de puissance produit par le moyen d'émission.

17. Système selon la revendication 8, dans lequel ladite unité de commande centrale (10) comprend de plus un moyen pour recevoir un signal d'activation d'alarme (90), dans lequel ledit signal d'activation d'alarme amorce une émission d'un message reçu par une alarme provenant dudit moyen d'émission (80) vers ledit récepteur du dispositif sans fil, et dans lequel ledit dispositif interface utilisateur, portatif et sans fil (50) est adapté pour émettre ledit signal d'activation d'alarme.

18. Procédé pour auto-surveiller périodiquement un chemin de communication dans des systèmes d'alarme sans fil, qui consiste à :
- synchroniser une période superviseur pour fournir un retard entre les émissions des messages superviseurs ;
- engendrer un message superviseur ;
- engendrer un signal de commande de la puissance d'émission comprenant un parmi au moins deux états après la fin de ladite période superviseur ; et
- émettre ledit message superviseur à un niveau de puissance réduit comme indiqué par ledit état dudit signal de commande de la puissance d'émission.

19. Procédé selon la revendication 18, consistant de plus à :
- engendrer un message d'état d'alarme en réponse à la réception d'un signal d'état d'alarme provenant d'un détecteur d'alarme ;
- engendrer ledit signal de commande de la puissance d'émission en réponse à la réception dudit signal d'état d'alarme provenant dudit détecteur d'alarme ; et
- émettre ledit message d'état d'alarme à un niveau de puissance normal comme indiqué par ledit état dudit signal de commande de la puissance d'émission.

20. Appareil pour auto-surveiller périodiquement un chemin de communication dans des systèmes d'alarme sans fil, qui comprend :
- un moyen pour synchroniser la période superviseur (32) en vue de synchroniser une durée d'une période superviseur existant entre les émissions des messages superviseurs ;
- un moyen (32) pour produire un signal de terminaison de période superviseur après la fin de ladite période superviseur ;
- un moyen de génération de message (36) pour engendrer ledit message superviseur et un signal de commande de la puissance d'émission, ledit signal de commande de la puissance d'émission comprenant un parmi au moins deux états ; et
- un moyen d'émission (41) pour émettre ledit message superviseur à un niveau de puissance réduit prédéterminé en réponse à un premier état dudit signal de commande de la puissance d'émission.

21. Appareil selon la revendication 20, dans lequel ledit moyen de génération de messages (36) comprend de plus un moyen pour engendrer un message d'état d'alarme et ledit signal de commande de la puissance d'émission en réponse à la réception d'un signal d'état d'alarme provenant d'un détecteur d'alarme.

22. Appareil selon la revendication 21, dans lequel ledit moyen d'émission (41) émet ledit message d'état d'alarme à un niveau de puissance normal prédéterminé en réponse audit état dudit signal de commande de la puissance d'émission.

23. Appareil selon la revendication 20, comprenant de plus un moyen d'oscillateur (34) pour produire un signal d'horloge de données qui synchronise ledit moyen de génération de messages (36) et un signal d'horloge de détecteur de phase qui synchronise ledit moyen d'émission (41).

24. Appareil selon la revendication 23, comprenant de plus un moyen de verrouillage de phase (38) pour maintenir sensiblement une corrélation entre une phase d'un signal d'émission et une phase dudit signal de détection de phase.

25. Appareil selon la revendication 24, dans lequel ledit moyen d'émission (41) module ledit signal d'émission avec ledit message superviseur engendré et produit ledit signal d'émission modulé.

26. Emetteur de détecteur d'alarme pour une utilisation dans un système d'alarme sans fil, qui comprend :
- un séquenceur de période superviseur (32) qui synchronise une durée d'une période superviseur existant entre les émissions de messages superviseurs et produit un signal de terminaison de période superviseur après la fin de ladite période superviseur ;
- un générateur de messages (36) qui engendre ledit message superviseur et un signal de commande de la puissance d'émission en réponse audit signal de terminaison de la période superviseur, ledit signal de commande de la puissance d'émission comprenant au moins deux états, ledit générateur de messages (36) engendrant un message d'état d'alarme et ledit signal de commande de la puissance d'émission en réponse à la réception d'un signal d'état d'alarme provenant d'un détecteur d'alarme ;
- un émetteur radioélectrique (41) qui émet ledit message superviseur à un niveau de puissance réduit prédéterminé en réponse audit état dudit signal de commande de la puissance d'émission et émet ledit message d'état d'alarme à un niveau de puissance normal prédéterminé en réponse audit état dudit signal de commande de la puissance d'émission, ledit émetteur radioélectrique (41) modulant ledit signal d'émission avec ledit message superviseur engendré et ledit message d'état d'alarme, et produisant ledit signal d'émission modulée ;
- un oscillateur (34) qui produit un signal d'horloge de données pour synchroniser ledit générateur de messages et un signal d'horloge de détection de phase pour synchroniser ledit émetteur radioélectrique (41), ledit signal d'horloge de données et ledit signal d'horloge de détection de phase étant sensiblement en phase l'un avec l'autre ; et
- un circuit à boucle de verrouillage de phase (38) qui maintient sensiblement une corrélation entre une phase dudit signal d'émission et une phase dudit signal d'horloge de détection de phase.
